# FASCICULE DE BREVET EUROPEEN

(11) **EP 1 833 403 B1**
(45) Date de publication et mention de la délivrance du brevet: **30.12.2015**
(21) Numéro de dépôt: 05815846.0
(22) Date de dépôt: 20.10.2005
(51) Int. Cl.: A61C 3/03

(54) **INSERT DE TAILLE POUR APPAREIL DENTAIRE A VIBRATIONS**
SCHNEIDEEINSATZ FÜR EIN VIBRIERENDES DENTALINSTRUMENT
CUTTING INSERT FOR A VIBRATING DENTAL INSTRUMENT

(30) Priorité: 20.10.2004 FR 0411129
(43) Date de publication de la demande: 19.09.2007
(73) Titulaire: LESAGE, Patrick, F-35400 Saint-Malo (FR)
(72) Inventeur: LESAGE, Patrick, F-35400 Saint-Malo (FR)
(74) Mandataire: Desormiere, Pierre-Louis
(86) Numéro de dépôt international: PCT/FR2005/050871
(87) Numéro de publication internationale: WO 2006/043007

(56) Documents cités:
- US-A- 6 062 858
- US-B1- 6 186 789

## Description

### Domaine et arrière plan de l'invention

La présente invention concerne les appareils de traitement dentaire et plus particulièrement les appareils à vibrations, tels que les appareils de détartrage, qui comprennent des instruments vibrant à des fréquences sonores ou ultrasonores.

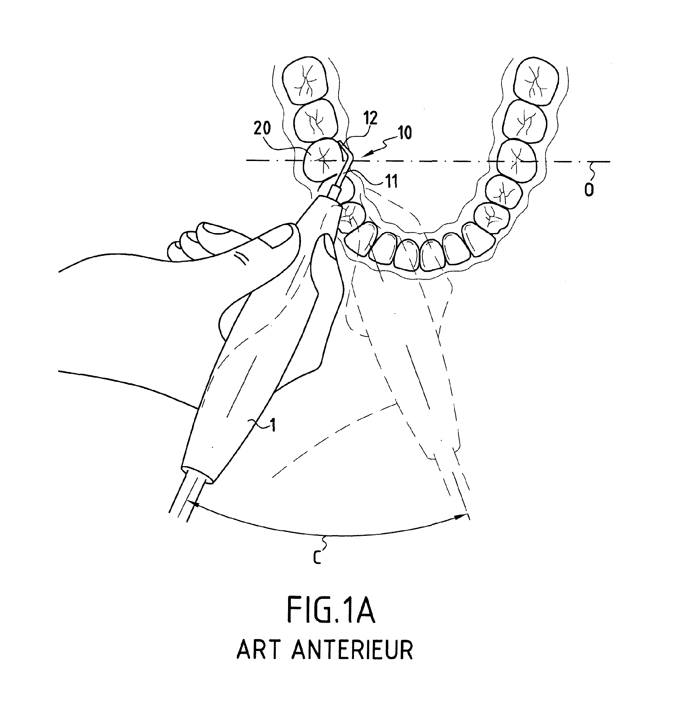

Ce type d'appareil, représenté en figure 1A, est formé essentiellement d'une pièce à main 1 comprenant un transducteur accouplé mécaniquement de façon rigide à un instrument vibrant dénommé « insert » 10, la pièce à main étant reliée à un générateur de vibrations (non représenté). Des exemples de tels inserts sont décrits notamment dans les documents US 6 312 256 et US 4 283 175.

L'insert est une pièce interchangeable qui présente une grande variété de formes suivant l'usage auquel elle est destinée (ex. détartrage : élimination de dépôts solides, surfaçage : élimination de biofilms, taille : cavités ou préparations de prothèse).

Comme illustré sur la figure 1A, les dispositifs existants comportent un corps 11, le plus souvent métallique, une extrémité de celui-ci étant assemblée de façon rigide au transducteur de la pièce à main 1, l'autre extrémité du corps 11 étant prolongée par un porte-outil lui-même prolongé par un outil 12 solidaire du corps. Cet outil comporte une zone travaillante qui peut être une arrête tranchante, une arrête lisse ou une surface lisse pouvant être associée à une suspension abrasive, ou encore une surface diamantée. Les vibrations produites par le transducteur sont ainsi transmises directement à la zone travaillante de l'outil.

De façon à pouvoir être utilisés sur toutes les faces des dents, les inserts sont souvent proposés dans trois formes : rectiligne, gauche et droit. Lors d'une opération de taille d'une dent, notamment en vue d'une préparation périphérique, le praticien doit utiliser au moins deux modèles d'inserts différents: un droit et un gauche.

En effet, en raison, de la limite d'ouverture de la bouche du patient et de la fermeture latérale de cette cavité par les joues qui est matérialisée sur la figure 1A par une ligne O, l'insert doit être coudé et son déplacement autour de la dent à tailler est relativement limité. La double-flèche C indiquée sur la figure 1A représente la course maximum sur laquelle le praticien peut déplacer la pièce à main 1.

En conséquence, lors d'une opération intéressant toute la périphérie de la dent, telle que par exemple la taille périphérique d'une dent 20 visant à préparer celle-ci par exemple pour la pose d'une prothèse (ex. couronne), le praticien doit utiliser au moins deux inserts : un insert adapté pour présenter la zone travaillante de l'outil sur la partie antérieure de la dent et un autre insert pour présenter la zone travaillante sur la partie postérieure de la dent.

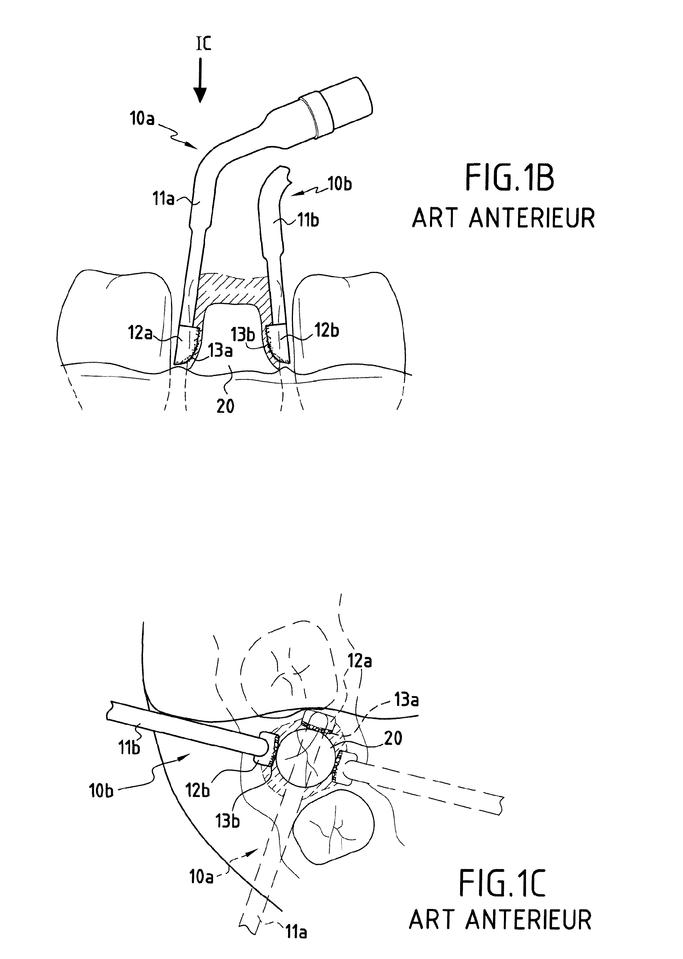

Plus précisément, tel que représenté sur les figures 1B et 1C, le praticien utilise un premier insert 10a comportant un corps 11a coudé avec la zone travaillante 13a de l'outil orientée vers l'intérieur de manière à pouvoir tailler la partie postérieure de la dent 20 avec la zone travaillante 13a de l'outil 12a et un second insert 10b avec un corps 11b coudé permettant de tailler la partie antérieure de la dent avec une zone travaillante 13b de l'outil 12b tournée vers l'extérieur.

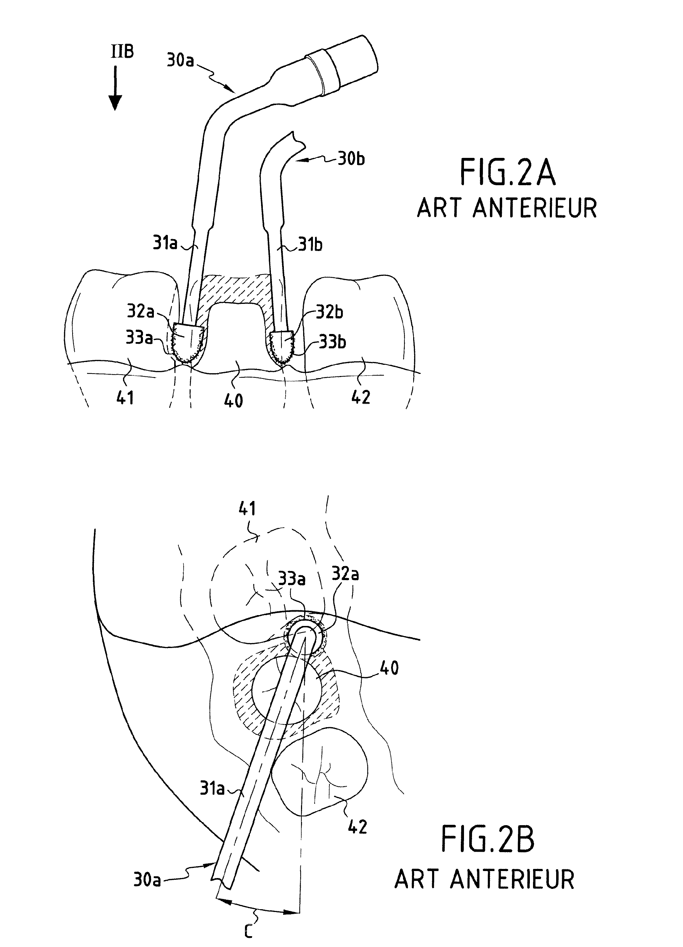

Pour éviter d'avoir à utiliser deux inserts lors d'une taille périphérique d'une dent, une autre solution consiste à utiliser un seul insert avec une zone travaillante axisymétrique. Des exemples d'un tel insert sont représentés sur les figures 2A et 2B qui montrent deux inserts 30a et 30b de différentes dimensions dont le corps 31a, respectivement 31b, est prolongé par un porte-outil et un outil 32a, respectivement 32b, présentant une zone travaillante axisymétrique 33a, respectivement 33b, comportant une surface diamantée sur tout son pourtour. Ainsi, il est possible pour le praticien d'opérer une taille périphérique d'une dent 40 avec un même insert.

Si cette solution permet une taille périphérique sans avoir besoin d'une course trop importante dans le déplacement angulaire de l'axe du corps de l'insert, elle présente cependant des inconvénients importants. En effet, comme illustré sur les figures 2A et 2B, en raison du caractère axisymétrique de la zone travaillante 32a de l'insert, et du fait que celle-ci doit avoir une forme de révolution dont la section reproduit la forme de préparation recherchée, l'outil doit présenter un diamètre égal au double de la profondeur de la taille, soit deux fois plus important que la largeur d'un outil asymétrique. Dans ce cas, soit l'insert est inutilisable, soit il y a un grand risque d'attaquer une partie des dents adjacentes 41, 42.

Une solution peut consister à utiliser un outil 23b de diamètre réduit. Cependant, l'utilisation d'un tel insert réduit considérablement la profondeur des tailles qui peuvent être réalisées sans supprimer totalement les risques d'endommagement des dents 41 et 42.

Par ailleurs, quel que soit le type d'insert utilisé, il existe des vibrations axiales qui entraînent des chocs au niveau de l'extrémité de la zone travaillante. Ces chocs peuvent conduire à un mauvais état de surface des parties travaillées.

Par conséquent, l'utilisation d'inserts vibratoires, qu'ils soient asymétriques ou axisymétriques, notamment pour des opérations de taille périphérique, s'avère relativement délicate et présente dans ce domaine peu d'avantages par rapport aux techniques usuelles d'instrumentation rotative.

Par ailleurs, un autre type d'insert est décrit dans le document US6186789B.

### Objet et résumé de l'invention

La présente invention a pour but de proposer une conception qui permet de présenter la zone travaillante de l'outil sur toutes les parties périphériques d'une dent, couronne ou racine, avec un même insert, et ce sans risque d'endommagement pour les dents adjacentes. Ce but est atteint grâce à un insert vibratoire qui, conformément à la présente invention, comporte un outil qui est monté libre en rotation avec l'extrémité du porte-outil qui est solidaire du corps de l'insert et qui reproduit les vibrations transmises par la pièce à main avec laquelle le corps de l'insert est couplé. L'outil comprend en outre dans sa partie inférieure au moins un doigt de guidage pour limiter la profondeur de pénétration de l'outil. Le doigt de guidage peut être formé par une pièce fixée sur l'outil, ou par une portion terminale du porte-outil traversant le fond de la cavité de l'outil.

Ainsi, l'insert selon l'invention présente une conception qui permet de désolidariser l'outil du reste du corps de l'insert qui est couplé à la pièce à main. Puisqu'il est libre en rotation autour du corps de l'insert, l'outil s'oriente automatiquement (i.e. tourne) pour rester en contact avec la dent de sorte qu'il est possible de présenter la zone travaillante sur toute la périphérie d'une dent avec un seul insert.

Conformément à un mode de réalisation de l'invention, l'outil comprend en outre deux zones travaillantes pour guider et maintenir l'outil au contact de la surface de la dent à traiter. En effet, le fait d'avoir deux zones travaillantes sur l'outil qui est libre en rotation permet de travailler avec deux points d'appui distincts à la surface de la dent. Ainsi, lors du déplacement de l'outil sur la dent, les deux zones travaillantes aident l'outil à rester au contact de la dent avec une grande stabilité puisque la force d'appui exercée par le praticien sur la pièce à main est répartie entre les deux zones travaillantes, ce qui résulte en un maintien sûr de l'outil sur la dent même lors de son déplacement.

Les autres parties de l'outil sont de préférence lisses pour protéger les dents adjacentes. Les zones travaillantes peuvent être traitées ou recouverte d'un matériau abrasif tel que du diamant. Les zones travaillantes présentent de préférence une forme qui correspond au traitement envisagé (taille, détartrage, surfaçage,...).

L'outil est un élément de préférence amovible et interchangeable qui comprend un alésage formant une cavité coopérant avec le porte-outil, un moyen d'accrochage au porte-outil laissant l'outil libre en rotation, une ou plusieurs parties travaillantes qui peuvent être une arrête tranchante, une arrête lisse, une surface lisse, une surface abrasive, ou une surface traitée mécaniquement, chimiquement ou thermiquement.

Selon un mode de réalisation de l'invention, les moyens d'accrochage de l'outil au porte-outil comprennent au moins une tige dont l'extrémité coopère avec des moyens de retenue ménagés sur le porte-outil.

L'outil peut être interchangeable si bien qu'un même corps d'insert peut être utilisé avec des outils différents.

Selon un aspect de l'invention, l'outil comporte une cavité formant un logement pour le porte-outil. Une pastille en matériau souple peut être disposée dans le fond de la cavité afin d'amortir les chocs ou les effets de percussions éventuels entre l'extrémité du porte-outil et l'outil.

La présente invention a également pour objet un appareil de traitement dentaire à vibrations sonores comprenant au moins une pièce à main chirurgicale reliée à un générateur de vibrations, caractérisé en ce qu'il comprend en outre au moins un insert tel que décrit précédemment.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1A est une vue en perspective montrant les limites de déplacement avec un insert asymétrique de l'art antérieur,
- la figure 1B est une vue partiellement en coupe qui illustre la nécessité de l'utilisation d'au moins deux inserts différents lors d'une taille périphérique d'une dent selon l'art antérieur,
- la figure 1C est une vue de dessus de la figure 1B illustrant la nécessité de l'utilisation d'au moins deux inserts différents lors d'une taille périphérique d'une dent selon l'art antérieur,
- la figure 2A est une vue partiellement en coupe d'une opération de taille réalisée avec des inserts axisymétriques de l'art antérieur,
- la figure 2B est une vue de dessus d'une opération de taille réalisée avec un insert axisymétrique selon l'art antérieur,
- la figure 3 est une vue en perspective d'un insert conformément à un mode de réalisation de l'invention,
- la figure 4 est une vue partiellement en coupe montrant l'insert de la figure 3 lors d'une opération de taille,
- la figure 5 est une vue de dessus montrant les différentes positions prises par la tête de travail de l'insert de la figure 3 lors d'une opération de taille,
- les figures 6A, 6B et 6C sont respectivement une vue en perspective et deux vues en coupe d'un mode de réalisation d'un insert, ne faisant pas partie de la présente invention, destiné au détartrage ou surfaçage des surfaces dentaires ou radiculaires, la figure 6C étant une vue de dessus montrant une dent et l'outil suivant la coupe VIC de la figure 6A,
- les figures 7A, 7B et 7C sont respectivement une vue en perspective et deux vues en coupe d'un insert conformément à un autre mode de réalisation de l'invention,
- les figures 8A, 8B et 8C sont respectivement une vue en perspective et deux vues en coupe d'un insert conformément à un autre mode de réalisation de l'invention.

### Description détaillée des modes de réalisation de l'invention

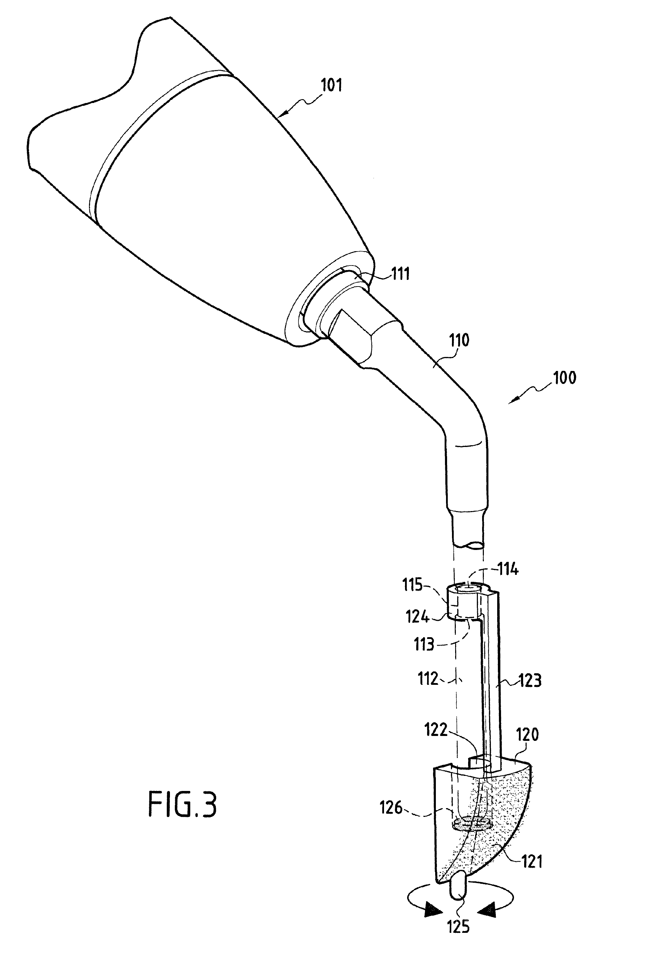

La figure 3 illustre un insert 100 conformément à un premier mode de réalisation de la présente invention. L'insert 100 comprend un corps 110 formé d'une seule pièce, par exemple en métal, qui présente une première extrémité 111 adaptée pour être fixée sur une pièce à main 101. De façon bien connue, la pièce à main 101 est un générateur de vibrations sonores ou ultrasonores qui peut comprendre un transducteur (non représenté) formé par exemple d'un matériau piézoélectrique et couplé mécaniquement de façon rigide à l'insert de manière à transmettre à ce dernier des ondes vibratoires. La seconde extrémité du corps 110 forme un porte-outil 112 qui est destiné à reproduire les vibrations transmises par la pièce à main. Le porte-outil 112 est rigidement assemblé au corps de l'insert 110 (système vis/écrou, soudure ou simple prolongement de l'insert).

Conformément à l'invention, un outil 120 est disposé au niveau du porte-outil 112. L'outil 120 comporte une cavité 122 servant de logement pour l'extrémité du porte-outil 112. L'outil 120 est relié au porte-outil 112 au moyen d'une tige 123 solidaire d'un anneau 124 qui permet, en prenant appui sur un épaulement 113, de limiter les déplacements en translation de l'outil sur le porte-outil. Dans le mode de réalisation présenté dans la figure 3, le porte-outil 112 comporte un second épaulement 114 qui forme avec l'épaulement 113 une gorge annulaire 115 dans laquelle vient se loger l'anneau 124. Toutefois, la retenue de l'anneau 124 pourrait être assurée par une simple couronne disposée sur le porte-outil 112 au niveau de l'épaulement 113 empêchant l'outil de s'échapper de l'extrémité du porte-outil, le fond de la cavité 122 servant alors de butée pour limiter la remontée de l'outil sur le porte-outil.

Comme il sera décrit plus loin, d'autres formes de moyens d'accrochage de l'outil sur le porte-outil peuvent être envisagées. D'une manière générale, tout type de moyens permettant de monter l'outil en libre rotation avec le porte-outil est susceptible de convenir pour la présente invention.

Selon les cas, la rotation de l'outil autour du porte-outil peut être totale ou bien limitée à une plage angulaire déterminée par le positionnement de butées.

Conformément à la présente invention, le porte-outil 112 de l'insert 100, qui correspond habituellement à l'outil, est ici logé dans la cavité 122 l'outil 120. De par ce montage, les vibrations reproduites à l'extrémité du porte-outil 112 sont transmises à l'outil 120 et plus particulièrement à la zone travaillante 121 de l'outil. Ainsi, l'insert comprend un élément mobile en rotation animé par les vibrations de l'extrémité du porte-outil 112.

De façon optionnelle, une pastille 126 en matériau souple (ex. métal mou ou élastomère) peut être disposée dans le fond de la cavité 122 pour amortir les chocs ou les mouvements de percussions entre l'extrémité du porte-outil 112 et l'outil 120.

L'outil 120 comporte une zone travaillante 121 destinée à venir en contact avec la paroi de la dent à tailler ou à traiter (détartrage, surfaçage,...). A cet effet, la zone travaillante 121 peut être recouverte d'un matériau abrasif tel que du diamant ou bien être lisse et éventuellement utilisée en association avec une solution contenant des particules abrasives. La forme de l'outil 120 et plus particulièrement celle de la zone travaillante 121 est fonction du profil de taille ou du traitement que l'on souhaite réaliser sur la dent.

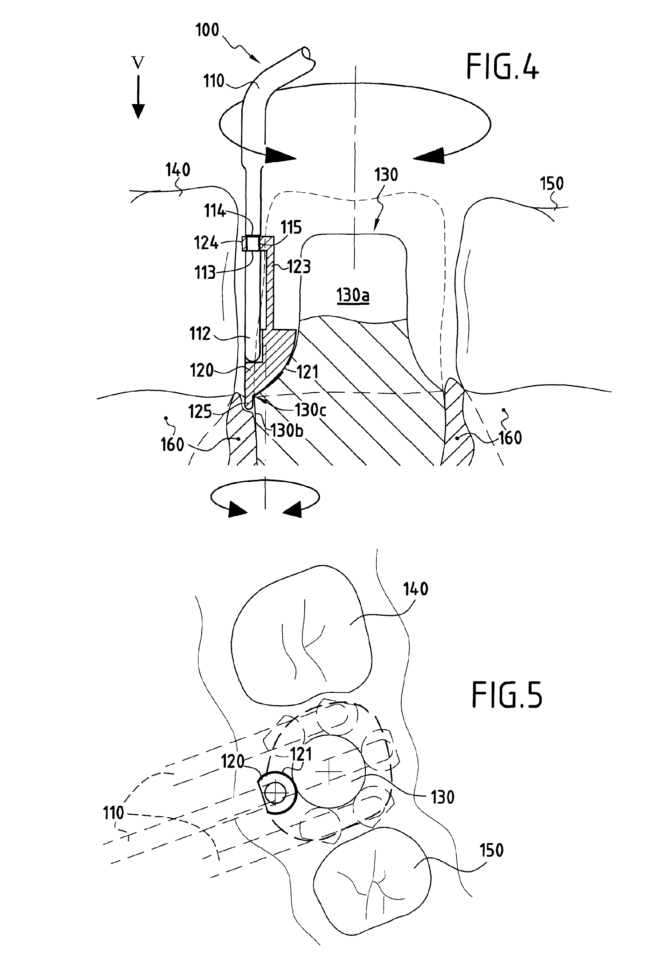

Les autres parties de l'outil 120 sont des parties lisses non traitées qui présentent de préférence des dimensions réduites pour faciliter le passage de la tête et éviter les contacts avec les dents adjacentes. En effet, comme illustré sur la figure 4, on constate que la partie la plus importante de l'outil 120 est celle qui comporte la zone travaillante 121 maintenue en contact avec la paroi de la dent à tailler. Le reste de l'outil 120 comprenant la tige 123 et l'anneau de retenue 124 présente un encombrement très réduit, ce qui limite les risques de contact avec la dent adjacente 140.

Le corps de l'insert ainsi que l'outil sont de préférence réalisés en un matériau apte à restituer et supporter des mouvements vibratoires dans des plages de fréquences pouvant s'étendre des gammes subsoniques aux gammes ultrasoniques. Un tel matériau peut être par exemple du métal.

Grâce à la libre rotation de l'outil 120 autour du porte-outil 112, il est possible de tailler une dent sur toute sa périphérie avec un seul modèle d'insert. Cela est illustré sur la figure 5 qui montre les différentes positions prises par l'outil 120 lors d'une taille périphérique d'une dent 130. On constate en outre que la libre rotation de l'outil 120 permet de garder le corps 110 de l'insert, et, par conséquent, la pièce à main avec laquelle il est couplé, quasiment toujours dans la même orientation. Cela permet au praticien de choisir une position de travail non plus en fonction de la portion de la dent à tailler mais en fonction de la position de travail la plus confortable pour lui comme par exemple suivant qu'il est droitier ou gaucher.

Selon la présente invention, l'outil est équipé à son extrémité d'un doigt de guidage 125. Comme illustré sur la figure 4, le doigt de guidage 125 empêche la zone travaillante 121 d'entrer en contact avec la gencive 160. Ainsi, l'opération de taille pour le praticien devient moins délicate du fait qu'il n'a plus à contrôler en permanence la distance entre le bout de l'outil et la gencive. Par ailleurs, comme illustré sur la figure 4, le doigt de guidage permet également d'écarter la gencive 160.

En outre, la position du doigt 125 sur l'outil ainsi que sa hauteur permettent de contrôler la profondeur de pénétration de la zone travaillante dans la dent. Plus précisément, le doigt de guidage 125 permet de contrôler la pénétration latérale de l'outil dans la dent. En effet, comme représenté en figure 4, il n'est plus possible d'enlever de matière une fois que le doigt de guidage 125 est en butée sur la surface 130b de la dent 130. Par conséquent, le doigt de guidage 125 joue le rôle d'une butée qui permet au praticien de tailler la dent sans précautions particulières en ce qui concerne la profondeur de pénétration de l'outil puisque celle-ci est limitée par avance grâce au doigt de guidage.

Dans une variante de réalisation, le doigt de guidage comporte aussi une zone travaillante pour assurer le détartrage et le nettoyage de la surface de la dent 130b et la régularisation de l'angle 130c.

L'outil peut présenter deux zones travaillantes, une zone diamantée assurant la taille de la dent et une zone lisse assurant le surfaçage de la paroi dentaire.

La forme du doigt de guidage peut être variée. Elle est de préférence cylindrique de manière à faciliter le guidage de l'outil sur la dent. Par ailleurs, selon les cas, deux doigts de guidage peuvent être disposés sur l'outil.

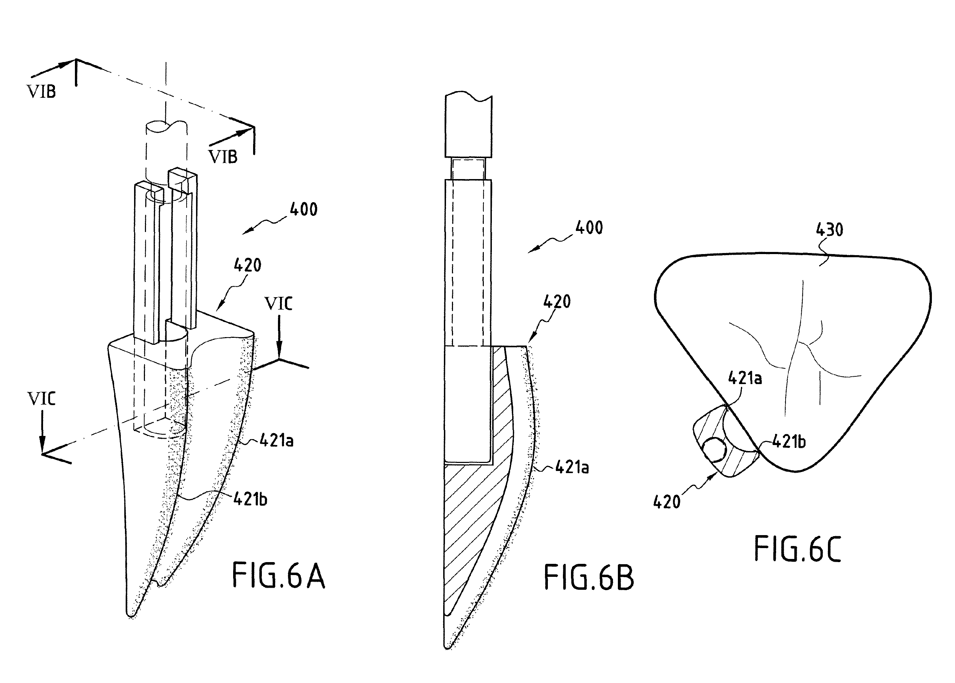

Les figures 6A à 6C illustrent un autre mode de réalisation d'un insert ne faisant pas partie de la présente invention. L'insert 400 représenté sur les figures 6A et 6B est destiné au détartrage/surfaçage. A cet effet, il comprend un outil 420 comportant deux zones travaillantes 421a et 421b formant des arrêtes, arrondies, éventuellement traitées et profilées suivant l'anatomie dentaire. La figure 6C met en évidence l'intérêt des deux zones travaillantes qui guident et maintiennent l'outil au contact de la surface de la dent 430 à traiter. En effet, l'outil est monté libre en rotation avec le porte-outil. Avec un outil comportant une seule zone travaillante et lorsque le praticien exerce une force d'appui sur la pièce à main afin de maintenir l'outil au contact de la dent qui présente des surfaces courbes, le maintien de l'outil à la surface de la dent peut s'avérer délicat (glissement de l'outil sur la dent aboutissant à une rotation non désirée de l'outil sur lui-même et à une perte de contact de la zone travaillante avec la surface de la dent). Avec deux zones travaillantes espacées l'une de l'autre comme illustrées sur la figure 6C, la force d'appui est répartie sur les deux zones travaillantes (double point de contact), ce qui permet d'avoir une bonne stabilité de l'appui de l'outil sur la dent, et ce même lorsque l'outil est déplacé. On garantit ainsi un bon contact des zones travaillantes avec la dent.

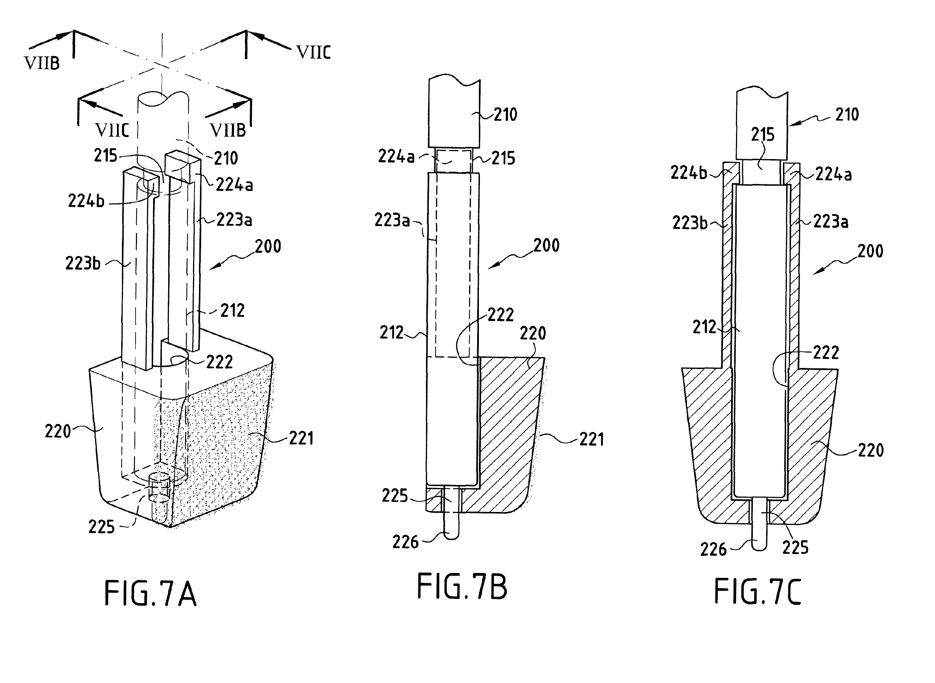

Les figures 7A à 7C représentent un autre mode de réalisation d'un insert selon l'invention. L'insert 200 présenté sur ces figures diffère tout d'abord de celui des figures 3 et 4 en ce qu'une partie de l'extrémité du porte-outil solidaire du corps de l'insert 210 traverse complètement l'outil. Plus précisément, comme illustré sur les figures 7A à 7C, le porte-outil 212 supporte un outil 220 dans lequel une cavité 222 a été ménagée pour recevoir l'extrémité du porte-outil 212. Cette extrémité présente une portion terminale 225 qui traverse le fond de la cavité 222. Dans ce mode de réalisation, la partie de la portion terminale 225 qui dépasse de l'outil 220 forme un doigt de guidage 226 qui permet de limiter la profondeur de pénétration de la même manière que décrite précédemment en relation avec le doigt de guidage 125 de l'outil 120.

L'autre différence notable avec le mode de réalisation présenté dans les figures 3 et 4, se situe au niveau des moyens utilisés pour accrocher l'outil au porte-outil. En effet, dans le mode de réalisation décrit ici, l'outil 220 est relié à deux tiges 223a, 223b comprenant chacune à leur extrémité une patte d'accrochage 224a, 224b qui s'engage dans une gorge 215 ménagée sur le porte-outil 212. Les tiges 223a et 223b sont élastiquement déformables de manière à faciliter le montage et/ou le démontage de l'outil sur le porte-outil.

De même que pour l'insert décrit plus haut, l'outil 220 comprend une zone travaillante 221 qui peut être soit recouverte d'un matériau abrasif tel que du diamant, soit être lisse ou traitée et éventuellement utilisée en association avec une solution contenant des particules abrasives. L'outil peut évidemment présenter encore bien d'autres types de formes que l'homme du métier envisagera sans difficultés en fonction du profil de taille qu'il souhaite réaliser.

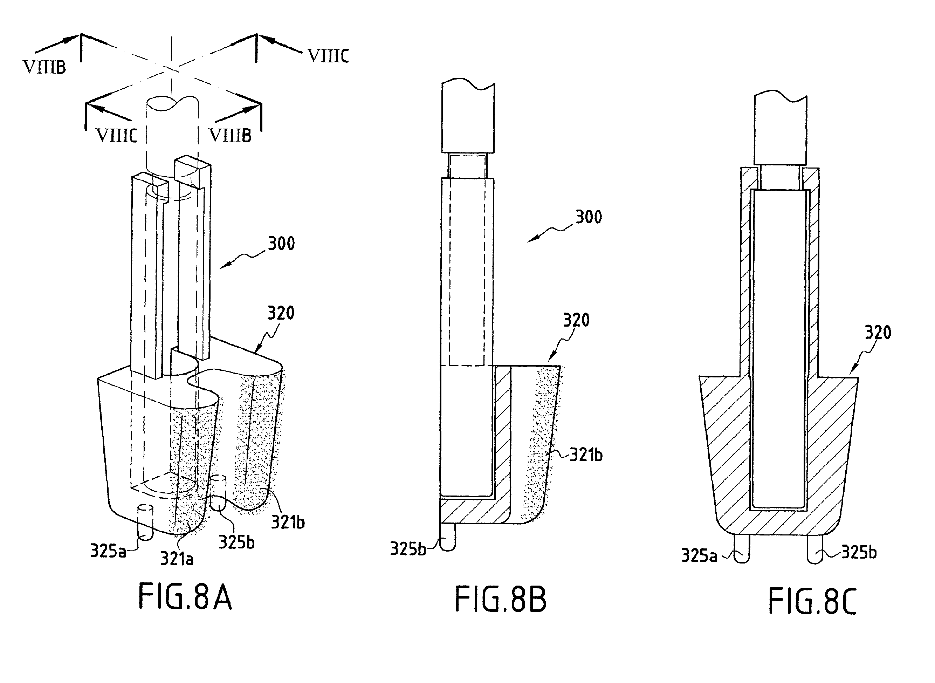

Les figures 8A à 8C illustrent une autre variante de réalisation d'un insert selon l'invention. L'insert présenté sur ces figures diffère de celui des figures 7A à 7C en ce que l'outil 320 comporte deux zones travaillantes 321a et 321b espacées l'une de l'autre par un creux. Ce type de forme d'outil permet un bon appui des zones travaillantes sur le pourtour des dents. Dans ce mode réalisation, l'outil 320 comporte deux doigts de guidage 325a et 325b.

Dans les modes de réalisations décrits précédemment, l'outil est monté libre en rotation autour du porte-outil. Toutefois, la présente invention n'est pas limitée à ce mode d'accrochage et peut être également accroché à l'intérieur du porte-outil. Dans ce dernier cas, l'outil est monté libre en rotation dans le porte-outil. D'une manière générale, conformément à la présente invention, l'outil doit être monté libre en rotation avec le porte-outil.

Les inserts de l'invention peuvent être utilisés avec des appareils périphériques à usage dentaire tels que des appareils de traitement à vibrations sonores ou ultrasonores qui, de par leur ergonomie et leurs fonctionnalités, constituent un produit fini. Un exemple de ce type d'appareils est notamment décrit dans le document FR 04 06630. Ces inserts peuvent être également mis en oeuvre avec des appareils présentés sous forme de modules destinés à être intégrés (technologie OEM) avec d'autres modules dans des produits dédiés tels que les postes de travail pour cabinet dentaire.

## Revendications

1. Insert vibratoire (100) comprenant un corps (110) ayant une première extrémité (111) adaptée pour être couplée mécaniquement de façon rigide avec une pièce à main chirurgicale (101) génératrice de vibrations et une seconde extrémité à laquelle est fixé un porte-outil (112) destiné à reproduire les vibrations transmises par la pièce à main, ledit insert comprenant en outre un outil (120) monté libre en rotation avec le porte-outil (112),
**caractérisé en ce que** l'outil (120) comprend dans sa partie inférieure au moins un doigt de guidage (125) pour limiter la profondeur de pénétration dudit outil (120).

2. Insert selon la revendication 1, **caractérisé en ce que** l'outil (320 ; 420) comprend deux zones travaillantes (321a, 321b; 421a, 421b) pour guider et maintenir ledit outil au contact de la surface de la dent (430) à traiter.

3. Insert selon la revendication 2, **caractérisé en ce que** chaque doigt de guidage (226) comprend lui-même une zone travaillante.

4. Insert selon la revendication 2 ou 3, **caractérisé en ce que** le doigt de guidage (226) est formé par une portion terminale (225) du porte-outil (212) traversant le fond d'une cavité (222) ménagée dans l'outil (220).

5. Insert selon l'une quelconque des revendications 1 à 4, **caractérisé en ce qu'**il comprend des moyens pour limiter la rotation de l'outil (120) à une plage angulaire déterminée.

6. Insert selon l'une quelconque des revendications 1 à 5, **caractérisé en ce que** l'outil (120) est amovible et interchangeable.

7. Insert selon l'une quelconque des revendications 1 à 6, **caractérisé en ce que** l'outil (120) est relié au corps (110) de l'insert par des moyens d'accrochage autorisant une libre rotation dudit outil (120) autour du porte-outil (112).

8. Insert selon la revendication 7, **caractérisé en ce que** les moyens d'accrochage comprennent au moins une tige (123) dont l'extrémité coopère avec des moyens de retenue (115) ménagés sur le porte-outil (112) de l'insert (100).

9. Insert selon l'une quelconque des revendications 1 à 8, **caractérisé en ce que** l'outil (120) comporte une cavité (122) formant un logement pour l'extrémité du porte-outil (112).

10. Insert selon la revendication 9, **caractérisé en ce qu'**une pastille en matériau souple (126) est disposée dans le fond de la cavité (122).

11. Insert selon l'une quelconque des revendications 1 à 10, **caractérisé en ce que** chaque zone travaillante (121) est recouverte d'un matériau abrasif.

12. Insert selon l'une quelconque des revendications 1 à 10, **caractérisé en ce que** chaque zone travaillante est traitée mécaniquement, chimiquement ou thermiquement.

13. Insert selon l'une quelconque des revendications 1 à 12, **caractérisé en ce que** chaque zone travaillante (121) présente une forme qui correspond au traitement à réaliser.

14. Appareil de traitement dentaire à ultrasons comprenant au moins une pièce à main chirurgicale reliée à un générateur d'ultrasons, **caractérisé en ce qu'**il comprend en outre au moins un insert (100 ; 200 ; 300) selon l'une quelconque des revendications 1 à 13.

## Patentansprüche

1. Schwingeinsatz (100), welcher einen Körper (110) umfasst, der ein erstes Ende (111), das geeignet ist, mit einem Schwingungen erzeugenden chirurgischen Handstück (101) auf feste Weise mechanisch gekoppelt zu werden, und ein zweites Ende, an welchem ein Werkzeugträger (112) befestigt ist, der dazu bestimmt ist, die durch das Handstück übertragenen Schwingungen zu reproduzieren, aufweist, wobei der Einsatz außerdem ein Werkzeug (120) umfasst, das frei drehbar mit dem Werkzeugträger (112) verbunden ist,
**dadurch gekennzeichnet, dass** das Werkzeug (120) in seinem unteren Teil wenigstens einen Führungsfinger (125) umfasst, um die Eindringtiefe des Werkzeugs (120) zu begrenzen.

2. Einsatz nach Anspruch 1, **dadurch gekennzeichnet, dass** das Werkzeug (320; 420) zwei Arbeitsbereiche (321a, 321b; 421a, 421b) umfasst, um das Werkzeug zu führen und in Kontakt mit der Oberfläche des zu behandelnden Zahns (430) zu halten.

3. Einsatz nach Anspruch 2, **dadurch gekennzeichnet, dass** jeder Führungsfinger (226) selbst einen Arbeitsbereich umfasst.

4. Einsatz nach Anspruch 2 oder 3, **dadurch gekennzeichnet, dass** der Führungsfinger (226) von einem Endabschnitt (225) des Werkzeugträgers (212) gebildet wird, der den Boden eines in dem Werkzeug (220) ausgebildeten Hohlraums (222) durchquert.

5. Einsatz nach einem der Ansprüche 1 bis 4, **dadurch gekennzeichnet, dass** er Mittel umfasst, um die Drehung des Werkzeugs (120) auf einen bestimmten Winkelbereich zu begrenzen.

6. Einsatz nach einem der Ansprüche 1 bis 5, **dadurch gekennzeichnet, dass** das Werkzeug (120) lösbar und austauschbar ist.

7. Einsatz nach einem der Ansprüche 1 bis 6, **dadurch gekennzeichnet, dass** das Werkzeug (120) mit dem Körper (110) des Einsatzes durch Anhängemittel verbunden ist, die eine freie Drehung des Werkzeugs (120) um den Werkzeugträger (112) ermöglichen.

8. Einsatz nach Anspruch 7, **dadurch gekennzeichnet, dass** die Anhängemittel wenigstens eine Stange (123) umfassen, deren Ende mit Haltemitteln (115) zusammenwirkt, die an dem Werkzeugträger (112) des Einsatzes (100) ausgebildet sind.

9. Einsatz nach einem der Ansprüche 1 bis 8, **dadurch gekennzeichnet, dass** das Werkzeug (120) einen Hohlraum (122) aufweist, der eine Aufnahme für das Ende des Werkzeugträgers (112) bildet.

10. Einsatz nach Anspruch 9, **dadurch gekennzeichnet, dass** eine Scheibe aus elastischem Material (126) im Boden des Hohlraums (122) angeordnet ist.

11. Einsatz nach einem der Ansprüche 1 bis 10, **dadurch gekennzeichnet, dass** jeder Arbeitsbereich (121) von einem abrasiven Material bedeckt ist.

12. Einsatz nach einem der Ansprüche 1 bis 10, **dadurch gekennzeichnet, dass** jeder Arbeitsbereich mechanisch, chemisch oder thermisch bearbeitet ist.

13. Einsatz nach einem der Ansprüche 1 bis 12, **dadurch gekennzeichnet, dass** jeder Arbeitsbereich (121) eine Form aufweist, welche der durchzuführenden Behandlung entspricht.

14. Gerät zur Zahnbehandlung mit Ultraschall, welches wenigstens ein chirurgisches Handstück umfasst, das mit einem Ultraschallgenerator verbunden ist, **dadurch gekennzeichnet, dass** es außerdem wenigstens einen Einsatz (100; 200; 300) nach einem der Ansprüche 1 bis 13 umfasst.

## Claims

1. Vibratory insert (100) comprising a body (110) having a first end (111) adapted to be mechanically coupled rigidly with a surgical handpiece (101) generating vibrations and a second end to which there is fixed a tool holder (112) intended to reproduce the vibrations transmitted by the handpiece, said insert furthermore comprising a tool (120) mounted able to rotate freely with the tool holder (112),
**characterised in that** the tool (120) comprises in its lower part at least one guide pin (125) for limiting the depth of penetration of said tool (120).

2. Insert according to claim 1, **characterised in that** the tool (320; 420) comprises two working areas (321a, 321b; 421a, 421b) for guiding and keeping said tool in contact with the surface of the tooth (430) to be treated.

3. Insert according to Claim 2, **characterised in that** each guide pin (226) itself comprises a working area.

4. Insert according to Claim 2 or 3, **characterised in that** the guide pin (226) is formed by a terminal portion (225) of the tool holder (212) passing through the bottom of the cavity (222) made in the tool (220).

5. Insert according to any one of Claims 1 to 4, **characterised in that** it comprises means for limiting the rotation of the tool (120) to a given angular range.

6. Insert according to any one of Claims 1 to 5, **characterised in that** the tool (120) is detachable and interchangeable.

7. Insert according to any one of Claims 1 to 6, **characterised in that** the tool (120) is connected to the body (110) of the insert by attachment means permitting free rotation of said tool (120) around the tool holder (112).

8. Insert according to Claim 7, **characterised in that** the attachment means comprise at least one rod (123) whereof the end cooperates with retaining means (115) made on the tool holder (112) of the insert (100).

9. Insert according to any one of Claims 1 to 8, **characterised in that** the tool (120) comprises a cavity (122) forming a housing for the end of the tool holder (112).

10. Insert according to Claim 9, **characterised in that** a pellet (126) made of flexible material is disposed in the bottom of the cavity (122).

11. Insert according to any one of Claims 1 to 10, **characterised in that** each working area (121) is covered with an abrasive material.

12. Insert according to any one of Claims 1 to 10, **characterised in that** each working area is treated mechanically, chemically or thermally.

13. Insert according to any one of Claims 1 to 12, **characterised in that** each working area (121) has a shape that corresponds to the treatment to be carried out.

14. Ultrasound dental treatment instrument comprising at least one surgical handpiece connected to an ultrasound generator, **characterised in that** it furthermore comprises at least one insert (100; 200; 300) according to any one of Claims 1 to 13.
